# EUROPEAN PATENT APPLICATION

(11) **EP 4 509 023 A1**
(43) Date of publication of application: **19.02.2025**
(21) Application number: 24191839.0
(22) Date of filing: 30.07.2024
(51) Int. Cl.: A47K 13/02, A47K 13/12, B29C 45/00

(54) **IMPROVED TOILET SEAT ASSEMBLY AND PRODUCTION METHOD THEREOF**

(30) Priority: 17.08.2023 IT 202300017340
(71) Applicant: Cominotti S.r.l., 25071 Agnosine Brescia (IT)
(72) Inventor: COMINOTTI, Michele, 25071 Agnosine Brescia (IT)
(74) Representative: Gualeni, Nadia

(57) **Abstract**

A cover (3) and/or a seat (2) for a toilet according to the present invention comprise a main body (34) made of an injection-molded plastics material. Below the main body (34) a pair of knuckles (31) protrude transversely at a rear portion (32), each of which defines therein a hinge seat (30) suitable for housing a coupling hinge with a toilet. In particular, the main body (34) comprises, incorporated at each knuckle (31), an insert (4) made of plastics material added during the injection molding step. Advantageously, a seat and/or a cover provided with inserts made of plastics material incorporated at the knuckles for the hinges during the molding step is free of unwanted curvatures due to the shrinkage of the material.

## Description

The present invention refers to a new toilet seat and/or cover made by injection molding.

In the bathroom furnishing sector, particular attention is paid to the materials used for making bathroom accessories, from towel rails to the toilet seat assembly, which must ensure high levels of strength and quality. In addition to aesthetics and functionality, safety with regard to the user's health and well-being is also a very important aspect within the sector. Considering the toilet seat assembly, that is, the seat and the cover of the toilet, the material used for its manufacture must not cause any kind of damage to the body. Making a good toilet seat assembly starts with the choice of raw material.

In the bathroom accessories industry, the use of plastics to make toilet seat assemblies is well known. These are mainly thermosetting resins, such as thermosetting urea (urea-formaldehyde), which has the appearance of ceramics, with a smooth, rigid surface. However, being a porous material, it has the disadvantage of being very absorbent and therefore with the passage of time the toilet seat assembly gives off bad odors. Furthermore, thermosetting urea is a material that may not be reused or recovered, and therefore the toilet seat assembly must be disposed of using proper procedures. Polyester resin toilet seat assemblies are also known in the industry, polyester resin being considered a top-of-the-line material due to a long production phase, which, however, raises the costs considerably. Furthermore, such material tends to turn yellow in a short time, is very fragile and is not easily disposed of. An example of a Bakelite toilet seat assembly with metal reinforcements at the knuckles intended to house the hinges for coupling with the toilet is shown in US 1 830 330 A. An example of a toilet seat assembly made of ABS resin (acrylonitrile butadiene styrene with metal reinforcements at the knuckles intended to house the hinges for coupling with the toilet is shown in FR 2 513 872 A1.

From the point of view of the increasing attention paid to environmental protection, the disposal of the toilet seat assembly at the end of its use or in the case of its replacement has become very important. The holder has therefore made a polyethylene terephthalate toilet seat assembly that is completely recyclable, durable, and has a level of aesthetics and robustness that is typical of high-end toilet seats. The holder has also made a recycled polyethylene terephthalate toilet seat assembly that is also environmentally sustainable as it is derived from post-consumer PET bottle flakes and/or PET bottle scraps from industrial production. An example of such a polyethylene terephthalate toilet seat assembly is described in patent document EP4088634A1 in the name of the holder.

During the molding step of the polyethylene terephthalate toilet seat assembly, the holder noticed some shrinkage problems in the material that led to the formation of unwanted curvatures in the seat, in particular at the pair of knuckles intended to house the hinges for coupling with the toilet.

The object of the present invention is to provide a toilet seat assembly, preferably made of polyethylene terephthalate, which is not affected by deformations during the molding step.

Such object is achieved by a cover for a toilet according to claim 1, a seat for a toilet according to claim 7, a toilet seat assembly according to claim 9, and an injection molding method according to claim 10. The dependent claims describe preferred or advantageous embodiments of the invention.

The features and advantages of the cover, the seat and the toilet seat assembly according to the present invention will appear more clearly from the following description, made by way of an indicative and nonlimiting example according to the accompanying figures, wherein:

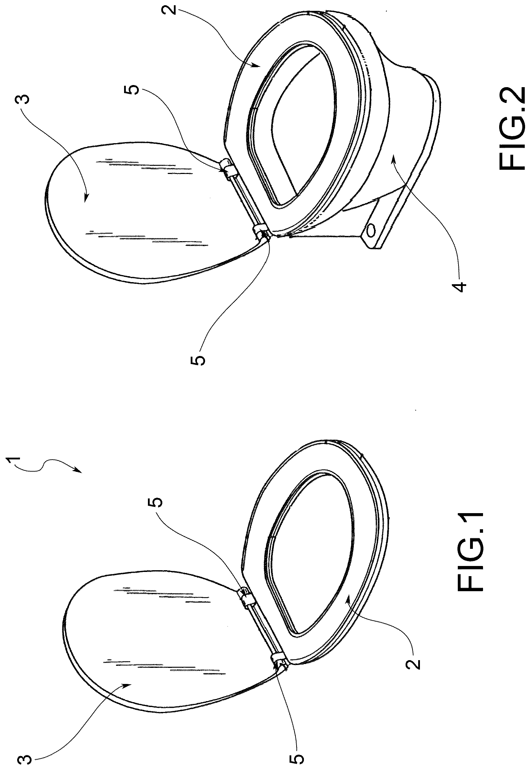

- Fig. 1 shows a toilet seat assembly, i.e., a seat and a cover, according to the present invention;
- Fig. 2 shows the toilet seat assembly of Fig. 1 applied to a toilet;
- Fig. 3A and 3B are a top view and a bottom view, respectively, of a cover for a toilet seat assembly according to the present invention;
- Fig. 4A and 4B are a side view and a view of the back of the cover in Fig. 3A and 3B, respectively;
- Fig. 5A and 5B are axonometric views of the knuckle with seat for the right hinge and of the knuckle with seat for the left hinge, respectively, of the cover of Fig. 3A and 3B;
- Fig. 6A and 6B are axonometric views of the molding insert of the right knuckle and of the molding insert of the left knuckle of the cover of Fig. 3A and 3B, respectively;
- Fig. 7A and 7B show a downward lateral section and an upward lateral section of the molding insert of the right knuckle of the cover of Fig. 3A and 3B;
- Fig. 8 shows the left knuckle of the cover in Fig. 3A and 3B in transparency to make the molding insert arranged therein visible;
- Fig. 9 shows a left knuckle in a different exemplary embodiment in transparency to make the molding insert arranged therein visible.

With reference to the attached figures, 1 has been used to indicate as a whole a seat assembly comprising a seat 2 and a cover 3 for a toilet 4.

The term "seat" refers to the annular portion that is employed when using the toilet in a seated position; the term "cover" refers to the element that may be placed on top of the seat, suitable for closing the toilet.

The toilet seat assembly 1 according to the present invention is made preferably of polyethylene terephthalate. Preferably, the material used is recycled polyethylene terephthalate (R-PET) obtained from post-consumer PET bottle flakes and/or PET bottle scraps from industrial production.

Preferably, the polyethylene terephthalate (PET) or recycled polyethylene terephthalate (R-PET) comprises acetaldehyde in an amount of < 3 ppm, preferably <1.5 ppm, as measured by the MC_PET-009 method.

Preferably, dye is added to the polyethylene terephthalate (PET) or recycled polyethylene terephthalate (R-PET) for a better aesthetic appearance of the toilet seat assembly 1. Preferably, the dye is white.

In a preferred exemplary embodiment, the seat 2 and/or the cover 3 is a solid body made of polyethylene terephthalate. Preferably, the entire toilet seat assembly 1 is made completely of polyethylene terephthalate. That is, both the seat 2 and the cover 3 are made of polyethylene terephthalate. The toilet seat assembly 1 according to the present invention is therefore 100% recyclable.

In a different exemplary embodiment, the toilet seat assembly 1 according to the present invention is made of acrylonitrile butadiene styrene (ABS). Thus the seat 2 and/or the cover 3 is a solid body made of acrylonitrile butadiene styrene. Preferably, the entire toilet seat assembly 1 is made completely of acrylonitrile butadiene styrene. That is, both the seat 2 and the cover 3 are made of acrylonitrile butadiene styrene.

The term "toilet seat assembly" 1 refers to a front portion and a rear portion at which the toilet seat assembly 1 is fastened to a toilet 70 by a pair of hinges 5, each of which hinges both the seat 2 and the cover 3 to the toilet 4.

Referring to the cover 3, for which a front portion 33 and a rear portion 32 are defined, such cover 3 comprises a flat main body 34, below which a pair of enlargements, called knuckles 31, protrude transversely at the rear portion 32, each of which defines therein a hinge seat 30 for a hinge 5. The knuckle 31 is a transversely protruding body below the main body 34. The knuckle 31 is provided with an inner compartment which defines the housing seat of the hinge 5.

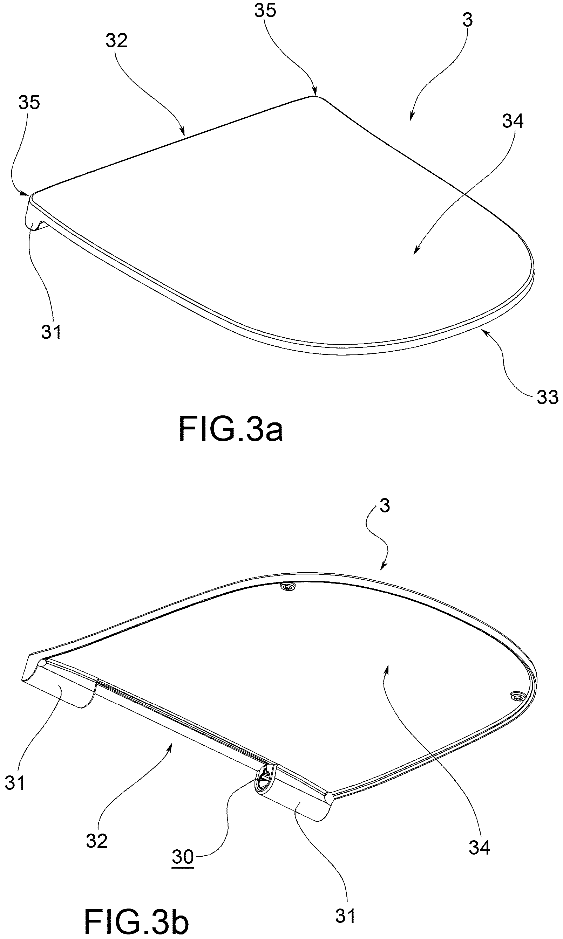

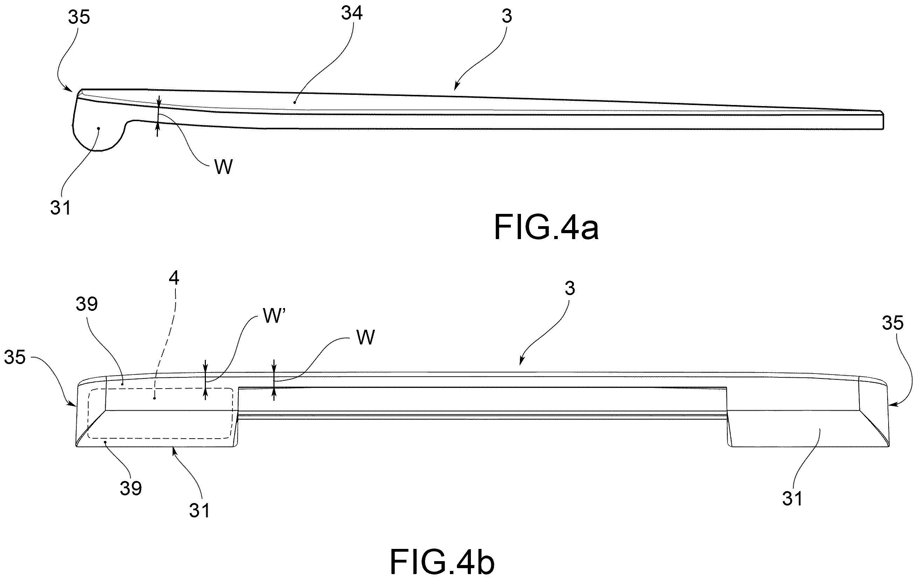

As seen in Fig. 3B and 4B, the knuckle 31 has an elongated tubular shape and extends from a lateral end 35 of the rear portion 32. In each knuckle 31, the inlet of the hinge seat 30 is opposite to the lateral end 35 of the rear portion 32. The knuckle 31 is therefore a cylinder with a closed end (at the lateral end 35) and an open end (at the inlet of the hinge seat 30).

It should be noted that the knuckle 31 is directly connected to the main body 34. In other words, the knuckle 31 is a cylinder protruding directly below the main body 34. The knuckle 31 is made in one piece with the main body 34.

With the exception of the inlet of the hinge seat 30, the knuckle 31 is preferably a continuous element, free of recesses or interruptions that would represent an unwanted receptacle for dirt.

In an exemplary embodiment, the hinge 5 is provided with a damping mechanism to cushion the falling motion of the seat 2 or the cover 3, accompanying it during its rotation about the rotation axis X, in the descent from a substantially vertical open position to a substantially horizontal closed position while resting on the rim of the toilet 4. The hinge with a damping mechanism and its operation are described in detail in European applications EP3017131A1, EP3515271A1 and EP3763261A1 in the name of the holder, the teaching of which is expressly incorporated herein.

The hinge 5 is insertable into a special hinge seat provided in the seat 2 and in the hinge seat 30 provided in the cover 3.

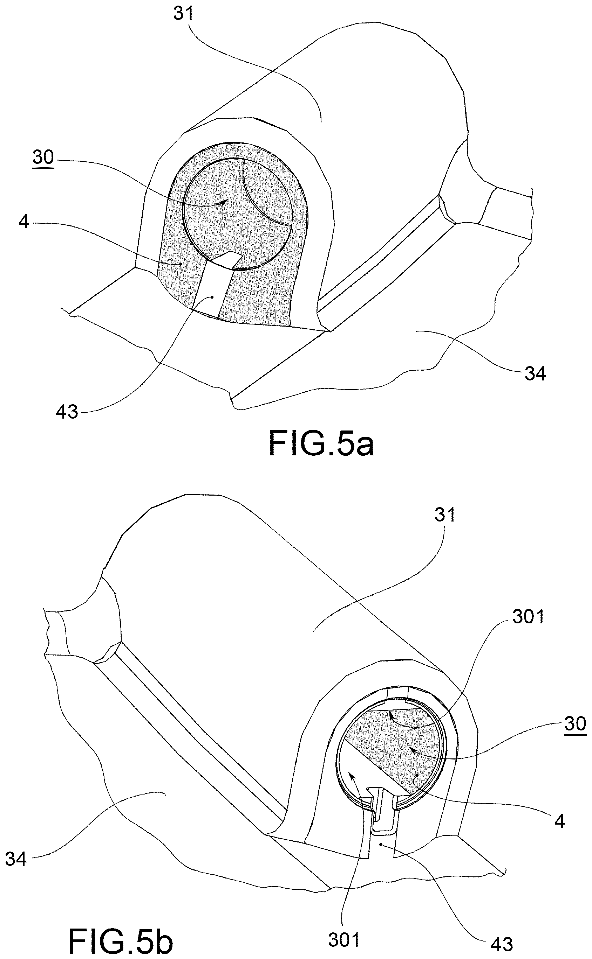

Taking the cover 3 as a reference, the hinge seat 30 is a duct coaxial with the rotation axis of the toilet seat assembly 1 and substantially cylindrical. As may be seen from the figures, the right hinge seat 30 (Fig. 5A) and the left hinge seat 30 (Fig. 5B) may be different, depending on whether they are intended to house a simple hinge or a hinge with a damping mechanism, respectively. In the case of a hinge seat 30 for a hinge with a damping mechanism, such as the one shown in Fig. 5B, the hole is not cylindrical but provided with an anti-rotation means between the cover 3 and the hinge, for example in the form of a pair of flat, opposing walls 301.

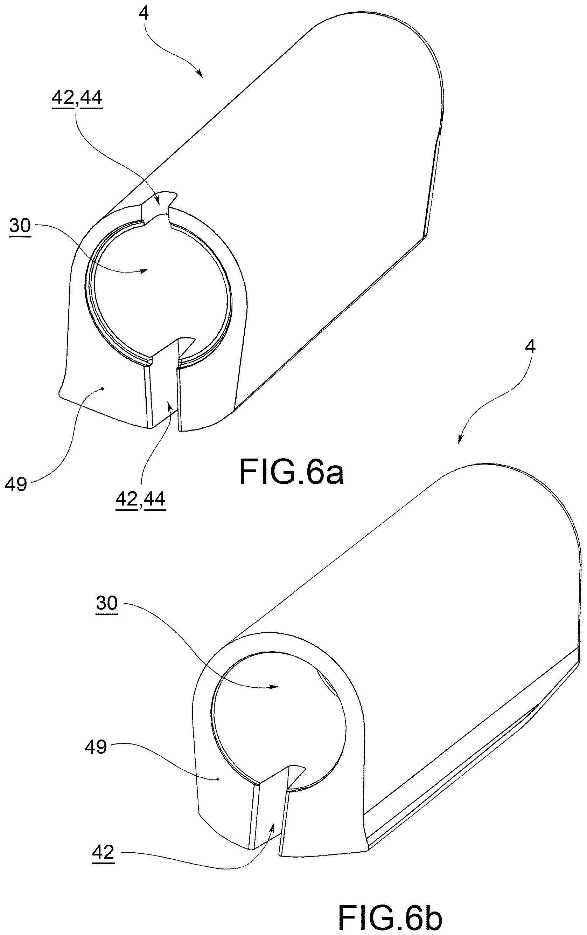

The toilet seat assembly 1 according to the present invention is obtained by injection molding of plastics material. As mentioned above, the holder noted that during the molding step of the polyethylene terephthalate toilet seat assembly there were problems with shrinkage of the material at the knuckles for the hinges, shrinkages which led to the formation of unwanted curvatures in the main body 34 at the knuckles 31. After a series of experiments, in order to avoid the occurrence of material shrinkages and outflows, the holder considered it necessary to reduce the amount of material injected into the mold at the knuckles. Not wishing to make interruptions in the knuckle, thus maintaining a continuous tubular geometry starting from the sides of the cover, the holder has found a particularly effective solution consisting in the insertion of a plastics insert 4, shown in Fig. 6A and 6B, at each knuckle 31 during the injection molding step. The cover 3 is then obtained by injection molding of plastics material in a mold containing a pair of plastics inserts 4, fitted above the male element of the mold intended to create the hinge seat 30, inserts that at the end of the process are incorporated into the cover 3. The same solution applied to the cover 3 may also be applied to the seat 2.

Preferably, the insert 4 is made of the same material used for the cover 3. Therefore, in the case of a cover 3 made of polyethylene terephthalate, the insert 4 is also made of polyethylene terephthalate.

As seen in Fig. 6A and 6B, the insert 4 is a single, tubular-shaped, elongated body, is hollow internally, and at least partially defines the hinge seat 30.

The insert 4 is substantially a cylinder with a closed end (at the bottom 45) and an open end (at the inlet of the hinge seat 30). It should be noted that the insert 4, apart from the end that is open at the inlet of the hinge seat 30, has no through openings or holes connecting the outside of the insert 4 with the inside of the hinge seat 30 to prevent the injection material that forms the cover 3 from entering the hinge seat 30.

Preferably, the outer surface of the insert 4 is smooth to facilitate the sliding of the injection material forming the cover 3.

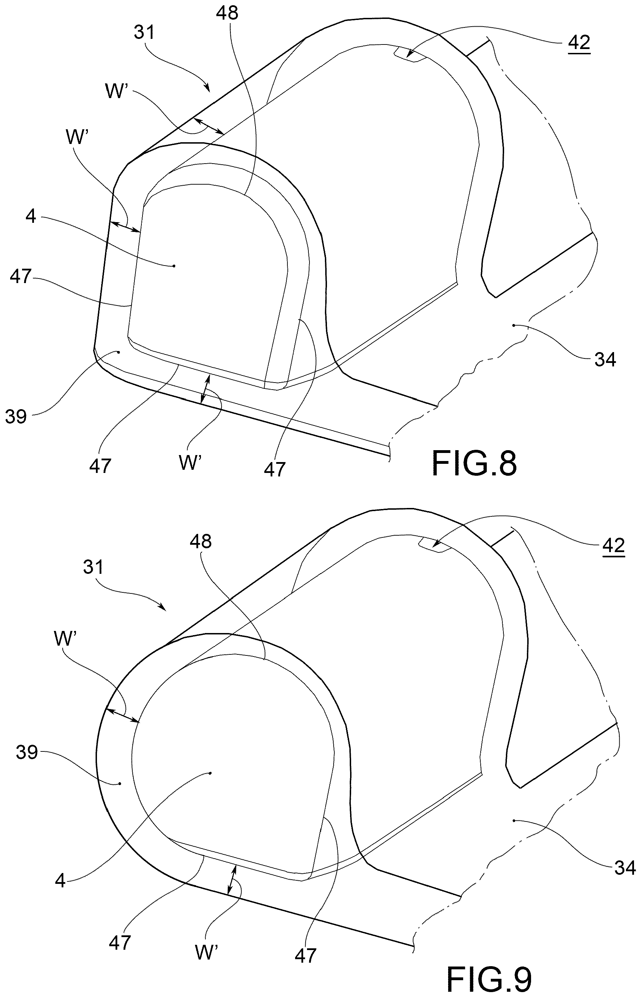

As seen in Fig. 8, the outer shape of the insert 4 is the same as that of the knuckle 31, but in a smaller version in order to be covered by a layer 39 of injection material that forms the cover 3, so as to be incorporated into said cover. In the example in Fig. 8, the outer shape of the insert 4 provides for three flat walls 47 and one semicircular wall 48; in the example in Fig. 9, the outer shape of the insert 4 provides for two flat walls 47 and two semicircular walls 48.

In order to avoid a risk of shrinkage of the material, it is preferable that the thickness W' of the layer 39 that encloses the insert 4 corresponds to the thickness W of the main body 34, a ±3mm variance.

In order to avoid a risk of shrinkage of the material, it is preferable for the thickness W' of the layer 39 that encloses the insert 4 to be constant.

Preferably, the insert 4 has at least one recess 42, or notch or groove, at least at the front wall 49 defining the inlet opening of the hinge seat 30, intended to be filled by the injection material forming the cover 3. This solution allows an anti-rotation means 43 to be obtained between the insert 4 and the cover 3. Therefore, the cover 3 has an anti-rotation means 43 in the form of a pin inserted into a recess 42 made in the insert 4.

Preferably, if the insert 4 is intended to at least partially form a hinge seat 30 for a hinge with a damping mechanism, such as the one shown in Fig. 5B, said insert 4 has at least one inlet channel 44 toward the inside of the hole of the hinge seat 30 intended to be filled by the injection material to form an anti-rotation means between the cover 3 and the hinge, for example in the form of a pair of flat, opposing walls 301.

In the example of Fig. 5B, the insert 4 is completely covered externally by the injection material; in the example of Fig. 5A, the insert 4 is completely covered externally by the injection material with the exception of the front wall 49 which defines the inlet opening of the hinge seat 30.

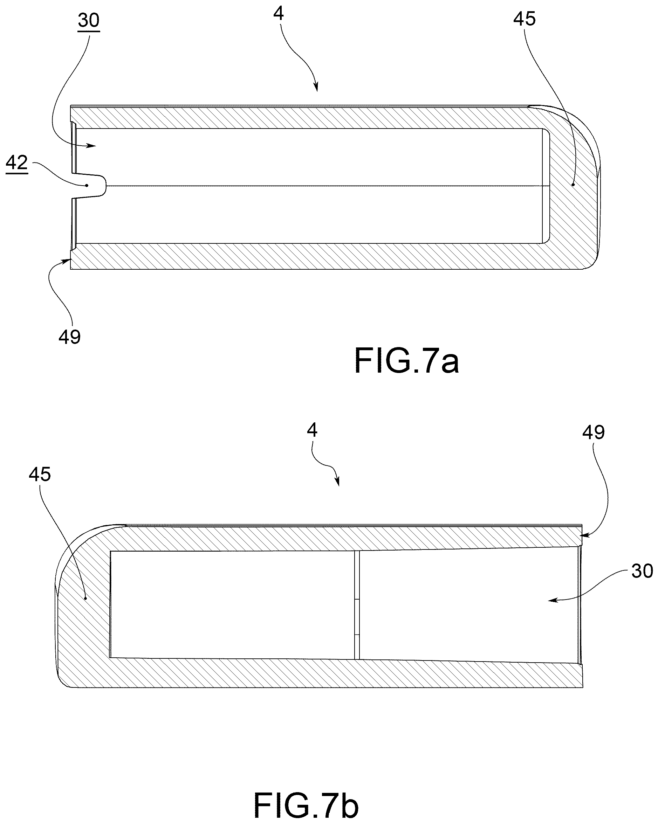

Preferably, but not necessarily, the insert 4 has a bottom wall 45 that closes the hinge seat 30 at the rear, as shown in Fig. 7A.

The present invention also refers to a method of injection molding for a seat 2 and/or for a cover 3 having an outer shape which provides for two knuckles 31 for hinges and provided with inserts 4 incorporated at the knuckles 31. This method involves:

- providing a mold having at least one mold cavity defining the outer shape of the seat 2 and/or the cover 3, said outer shape also comprising the outer shape of the knuckles 31;

- providing, inside the mold at the outer shape of the knuckles 31, a pair of pins, each suitable for defining a hinge seat 30;

- fitting, onto each pin, an insert 4 made of plastics material;

- injecting a plastics material into the mold cavity to form the seat 2 and/or the cover 3 with the inserts 4 incorporated at the knuckles 31.

Preferably, the plastics material for forming the cover 3 is the same plastics material that forms the insert 4. Preferably, said plastics material is polyethylene terephthalate.

As already mentioned, the description referring to the solution of the cover 3 is equally applicable also to the seat 2.

Innovatively, a toilet seat assembly comprising a seat and/or a cover for a toilet according to the present invention is provided with inserts made of plastics material incorporated at the knuckles for the hinges during the molding step and is free of unwanted curvatures due to the shrinkage of the material.

Advantageously, in the version wherein the plastics material for forming the toilet seat assembly is the same plastics material that forms the insert and is polyethylene terephthalate, the cover is recyclable, strong, and has a level of aesthetics and solidity typical of high-end toilet seat assemblies.

Advantageously, a toilet seat assembly made of recycled polyethylene terephthalate is also environmentally sustainable, as it is derived from flakes of post-consumer PET bottles and/or PET bottle scraps from industrial production.

It is understood that a person skilled in the art could make modifications to the device described above, all of which are contained within the scope of protection as defined by the following claims.

## Claims

1. A cover (3) for a toilet comprising a main body (34) made of an injection molded plastic material,
wherein a pair of knuckles (31) protrude transversely at a rear portion (32), below the main body (34);
wherein each knuckle (31) defines a hinge seat (30) therein, suitable for housing a coupling hinge with a toilet;
said cover (3) being **characterized in that** the main body (34) comprises, incorporated at each knuckle (31), an insert (4) made of a plastic material, said insert being added during the step of injection molding of the main body (34).

2. Cover (3) according to claim 1, wherein the plastic material forming the main body (34) is the same plastic material of which the insert (4) is made, and wherein said plastic material is polyethylene terephthalate.

3. Cover (3) according to any one of the preceding claims, wherein the knuckle (31) is a cylinder with a closed end and an open end for access to the hinge seat (30) .

4. Cover (3) according to any one of the preceding claims, wherein the knuckle (31) protrudes directly below the main body (34).

5. Cover (3) according to any one of the preceding claims, wherein
- said knuckle (31) has a tubular shape and extends from a lateral end (35) of the rear portion (32),
- said hinge seat (30) is opposite to said lateral end (35),
- said knuckle (31) is a continuous body without interruptions.

6. Cover (3) according to any one of the preceding claims, wherein the insert (4) is an internally hollow, tubular single body, at least partially defining the hinge seat (30).

7. Cover (3) according to any one of the preceding claims, wherein the insert (4) is covered with a layer (39) of injection material forming the main body (34), wherein the thickness (W') of the layer (39) corresponds to a thickness (W) of the main portion (34), and/or
wherein the thickness (W') of the layer (39) is constant.

8. Cover (3) according to any one of the preceding claims, wherein the insert (4) has at least one recess (42) at a front wall (49) defining the hinge seat (30), said recess (42) being intended to be filled with the injection material forming the main body (34).

9. Cover (3) according to any one of the preceding claims, wherein the insert (4) is provided with a closed end and an open end for access to the hinge seat (30).

10. Cover (3) according to any one of the preceding claims, wherein the insert (4) has a smooth outer surface.

11. A seat (2) for a toilet comprising a main body made of an injection molded plastics material,
wherein a pair of knuckles (31) protrude transversely at a rear portion, below the main body;
wherein each knuckle (31) defines a hinge seat (30) therein, suitable for housing a coupling hinge with a toilet;
said seat (2) being **characterized in that** the main body comprises, incorporated at each knuckle (31), an insert (4) made of a plastic material added during the injection molding step.

12. Seat (2) according to claim 11, wherein the plastic material forming the main body is the same plastic material of which the insert (4) is made, and wherein said plastic material is polyethylene terephthalate.

13. Seat assembly for a toilet, comprising a seat (2) according to claim 11 or 12, and/or a cover (3) according to one of claims 1 to 10.

14. A method for injection-molding a seat (2) according to claim 11 and/or a cover (3) according to claim 1, said seat (2) and cover (3) having an outer shape including two knuckles (31) for hinges, said method comprising the steps of:
- providing a mold having at least one mold cavity defining the outer shape of the seat (2) or cover (3), said outer shape also comprising the outer shape of two knuckles (31);
- providing, inside the mold at the outer shape of the knuckles (31), a pair of pins, each suitable for defining a hinge seat (30);
- fitting, onto each pin, an insert (4) made of a plastic material;
- injecting a plastic material into the mold cavity to form the seat (2) and/or the cover (3) with the inserts (4) incorporated at the knuckles (31).
